# FASCICULE DE BREVET EUROPEEN

(11) **EP 3 311 328 B1**
(45) Date de publication et mention de la délivrance du brevet: **18.12.2019**
(21) Numéro de dépôt: 16731106.7
(22) Date de dépôt: 16.06.2016
(51) Int. Cl.: G06K 7/08

(54) **PIÈCE DE MAINTIEN D'UNE TÊTE DE LECTURE MAGNÉTIQUE**
KOMPONENTE ZUM HALTEN EINES MAGNETLESEKOPFS
COMPONENT FOR HOLDING A MAGNETIC READING HEAD

(30) Priorité: 16.06.2015 FR 1555514
(43) Date de publication de la demande: 25.04.2018
(73) Titulaire: Ingenico Group, 75015 Paris (FR)
(72) Inventeur: ANDRE, Jérôme, 26800 Montoison (FR); ROSSIGNOL, Michel, 26760 Monteleger (FR); BERTHIAUD, Olivier, 07130 Cornas (FR)
(74) Mandataire: Vidon Brevets & Stratégie
(86) Numéro de dépôt international: PCT/EP2016/063966
(87) Numéro de publication internationale: WO 2016/202958

(56) Documents cités:
- WO-A1-2015/014112
- WO-A2-2005/060491
- CN-U- 203 930 856
- US-A1- 2015 097 033

## Description

### 1. Domaine

L'invention se rapporte à une pièce de maintien d'un boitier d'une tête de lecture magnétique, en particulier pour un lecteur de cartes magnétiques à fente (correspondant à l'expression anglaise « swipe reader »).

De tels lecteurs de cartes magnétiques à fente sont par exemple utilisés dans des terminaux de paiements ou dans des systèmes de contrôles d'accès qui permettent, au moyen d'une carte à mémoire magnétique, respectivement d'effectuer des achats ou d'accéder à un site sécurisé. La carte à mémoire magnétique comprend une ou plusieurs bandes disposées généralement au dos de la carte selon la norme ISO 7811.

Une grande proportion de cartes, notamment en Europe, sont appelées cartes multimodales car, en plus de la bande magnétique, elles comprennent également une puce électronique et éventuellement un dispositif de communication sans contact.

Les terminaux de paiement et les systèmes de contrôle d'accès disposent souvent de plusieurs lecteurs pour interagir avec ces cartes : un lecteur de cartes à mémoire à puce, un lecteur de cartes à mémoire magnétique, voire un dispositif de communication sans contact.

### 2. Art Antérieur

Les cartes à mémoire magnétique compatibles avec la norme ISO 7811 comprennent une bande magnétique comportant trois pistes d'enregistrement. Des données cryptées peuvent être codées sur ces pistes et contenir des informations en relation avec le possesseur de la carte, ou à un compte bancaire.

Lors de son utilisation, la carte à mémoire magnétique est insérée à l'extrémité d'une fente dans un lecteur. Une tête de lecture magnétique se trouve sur une des parois formant la fente, de telle sorte que la bande magnétique est présentée en regard de la tête de lecture magnétique.

Lors d'un mouvement de translation de la carte dans la fente, la tête de lecture magnétique entre en contact avec la bande magnétique. La tête de lecture magnétique mesure la polarisation des particules magnétiques au cours du mouvement de translation, pour en déduire des informations numériques. Lors de la lecture, une pression est donc exercée sur la tête magnétique qui doit pouvoir se déplacer légèrement dans une direction perpendiculaire aux parois de la fente et subir un léger gîte autour de cette direction, tout en retrouvant sa position d'origine après le passage de la carte dans la fente.

De nombreux dispositifs de maintien du boitier de la tête magnétique ont été proposés, afin d'assurer au mieux cette fonction de guidage pendant la lecture de la bande, et la fonction de retour de la tête de lecture à sa position d'origine après la lecture de la bande.

D'importants efforts de réduction des dimensions et des coûts de fabrication des terminaux ont été réalisés. La complexité, la compacité et les techniques d'assemblage de leurs éléments constitutifs sont devenues des problèmes essentiels lors de la conception de ces terminaux.

Ces efforts se sont naturellement portés sur la conception du lecteur de carte magnétique qui est un élément important d'un tel terminal, et en particulier sur le dispositif de maintien de la tête de lecture magnétique.

Le document WO2006/032824 propose un dispositif de maintien du boitier d'une tête de lecture magnétique, particulièrement compact. Le dispositif décrit est constitué d'une pièce unique comprenant une embase. Le dispositif selon l'art antérieur du document WO 2006/032824 assurait également une fonction de fixation sur la carte mère : des trous sont prévus dans l'embase pour la fixer au lecteur au moyen de vis. La déformation élastique de la pièce métallique provoque un mouvement de pivotement de la tête de lecture magnétique autour d'un axe passant par les trous de fixation de l'embase. Pour assurer un bon contact de la tête magnétique sur la bande magnétique, le dispositif permet à la tête de lecture d'effectuer un mouvement de rotation sur elle-même autour d'un axe, grâce à des ouvertures pratiquées dans son boitier; des portions en saillie de la pièce unique venant s'insérer dans les ouvertures du boitier de la tête. Au final le dispositif est relativement complexe.

US 2015/097033 divulgue une pièce de maintien d'un boîtier d'une tête de lecture magnétique d'un lecteur de cartes magnétiques. La pièce de maintien comprend un cadre métallique ayant une ouverture correspondant à la forme de la tête de lecture, deux parois perpendiculaires à la surface principale du cadre pour retenir la tête de lecture 230, et deux bras formant chacun un point d'attache. Les caractéristiques dans le préambule de revendication 1 sont connues de US 2015/097033.

D'autres pièces de maintien sont connues de WO 2005/060491, CN 203 930 856 et WO 2015/014112.

### 3. Résumé

La présente divulgation, dans au moins un mode de réalisation, permet de résoudre au moins en partie certains problèmes posés par l'art antérieur.

Plus précisément au moins un mode de réalisation a pour objectif de fournir une pièce de maintien d'une tête de lecture magnétique particulièrement compacte.

Au moins un mode de réalisation a également pour objectif de fournir une pièce de maintien d'une tête de lecture magnétique dont le procédé de fabrication est simple et peu onéreux.

L'objectif d'au moins un mode de réalisation est de faciliter la fixation d'une pièce de maintien d'une tête de lecture magnétique sur la carte mère d'un lecteur de cartes magnétiques à fente.

Enfin au moins un mode de réalisation a pour objectif d'améliorer la liaison électrique d'une pièce de maintien d'une tête de lecture magnétique avec la masse d'un lecteur de cartes magnétiques à fente.

Dans ce but la présente divulgation concerne une pièce de maintien d'un boîtier d'une tête de lecture magnétique d'un lecteur de cartes magnétiques, la pièce de maintien comprenant une surface plane ajourée sensiblement de même longueur et de même largeur que la face arrière du boîtier de la tête de lecture, deux surfaces perpendiculaires à ladite surface plane ajourée formant deux montants latéraux parallèles entre eux destinés à enserrer le boîtier de la tête de lecture magnétique, et au moins un point d'attache, caractérisée en ce que ladite surface plane ajourée est destinée à être disposée en regard de la face arrière du boîtier de la tête de lecture.

Ainsi, la pièce de maintien possède une taille réduite tout en ayant une élasticité adéquate pour permettre la lecture de données en provenance d'une piste magnétique d'une carte.

La présente divulgation concerne également un lecteur de cartes magnétiques à fente comportant une tête de lecture magnétique maintenue par une telle pièce de maintien.

Dans au moins un mode de réalisation la surface plane ajourée de la pièce de maintien a une forme en zigzag. Cette forme confère à la pièce une bonne élasticité avec une surface très réduite.

Dans au moins un mode de réalisation la pièce de maintien est métallique, ce qui permet d'assurer une bonne liaison électrique avec la masse d'un lecteur de cartes magnétiques à fente.

Dans au moins un mode de réalisation, la pièce comporte deux bras portant chacun un point d'attache avec une ouverture destinée à être enfichée dans un élément support fixé à la carte mère d'un lecteur de cartes magnétiques à fente. La fixation de la tête de lecture sur la carte mère d'un lecteur est ainsi facilitée. La présente divulgation concerne également un tel lecteur comportant une carte mère sur laquelle est fixé un élément support dans lequel sont enfichées les deux ouvertures des points d'attache de la pièce de maintien ; et notamment un tel lecteur où l'élément de support est soudé à la carte mère ce qui permet un montage aisé.

Dans au moins un mode de réalisation l'élément support et la pièce de maintien sont métalliques, et l'élément support est relié à la masse du lecteur, ce qui permet une excellente mise à la masse de la pièce de maintien.

### 4. Figures

D'autres caractéristiques et avantages apparaîtront plus clairement à la lecture de la description suivante d'un mode de réalisation particulier de la divulgation, donné à titre de simple exemple illustratif et non limitatif, et des dessins annexés, parmi lesquels :
- la figure 1 montre un exemple de terminal de paiement comprenant un lecteur de cartes magnétiques à fente extrêmement compact ;
- la figure 2 illustre une tête de lecture magnétique ;
- la figure 3 représente un exemple de pièce de maintien du boitier de tête de lecture magnétique selon la présente innovation ;
- la figure 4 représente un élément de support conforme à la présente divulgation ;
- la figure 5 montre l'assemblage de la pièce de maintien de la figure 3 avec l'élément de support de la figure 4 ;
- les figures 6 et 7 représentent la pièce de maintien de la figure 3 lorsqu'elle maintient une la tête de lecture de la figure 2, une fois assemblé avec l'élément de support de la figure 4;
- Les figures 8 et 9 illustrent deux étapes de l'assemblage de la pièce de maintien de la figure 3 avec l'élément support de la figure 4 qui est soudé sur une carte mère.

### 5. Mode de réalisation

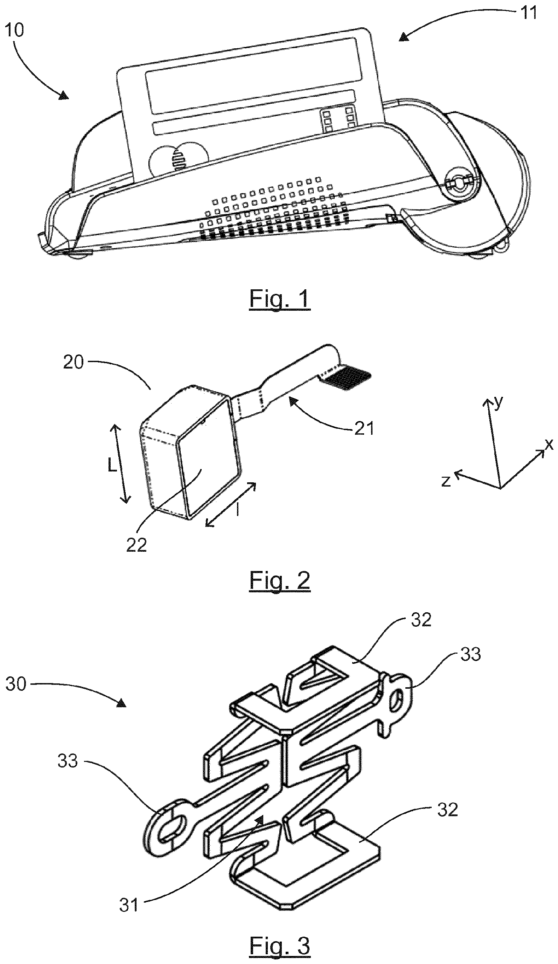

La figure 1 représente un terminal 10 de paiement comprenant un lecteur de cartes magnétiques à fente extrêmement compact, lecteur dans lequel une carte de paiement 11 est insérée. Comme cela est explicité par la suite, une pièce de maintien conforme à la présente technique peut être employée dans le cadre d'un terminal de ce type.

On décrit, en relation avec les figures 2 à 9, un mode de réalisation d'une pièce de maintien conforme à la présente technique.

La figure 2 représente un boitier de tête de lecture magnétique (20), muni de son câble de connexion (21). Le boitier (20) présente une face arrière (22) sensiblement plane parallèle au plan OXY, de longueur L et de largeur l. De façon tout à fait classique, la lecture des données mémorisées sur la bande magnétique d'une carte (11) est réalisée en mettant en contact la tête de lecture magnétique située sur la face avant du boitier (20) avec la bande magnétique, puis en effectuant une translation de la carte (11) tout en maintenant le contact entre la bande magnétique et la tête de lecture.

La figure 3 représente un mode de réalisation d'un dispositif de maintien (30) selon la présente technique. Ce dispositif est constitué d'une pièce unique (30) comprenant une surface plane ajourée (31) dont la longueur et la largeur sont sensiblement égales à la longueur L et la largeur l de la face arrière (22) du boitier (20) de la tête de lecture magnétique.

La pièce unique (30) comprend également deux montants latéraux (32) parallèles entre eux, entre lesquels vient s'insérer le boitier (21) de la tête de lecture. Dans le mode de réalisation représenté sur la Figure 3, les deux montants latéraux (32) enserrent le boitier (21) dans le sens de la largeur l. Naturellement une pièce de maintien (30) comprenant des montants (32) enserrant le boitier (20) dans le sens de la longueur L est un mode de réalisation alternatif qui est également conforme à la divulgation.

La pièce unique (30) comprend un ou plusieurs points d'attache (33) permettant de rendre la pièce (30) solidaire du lecteur (10). Dans le mode de réalisation particulier représenté sur la Figure 3, deux points d'attache (33) se trouvent aux extrémités de deux bras latéraux dépassant légèrement de la surface plane ajourée (31), de façon à faciliter la fixation de la pièce (30) sur le lecteur (10), tout en conservant son extrême compacité. Ce mode de réalisation présente un bon compromis entre le gain de place et la facilité d'utilisation mais naturellement d'autres positionnements du ou des points d'attaches (33) sont possibles tout en restant dans le cadre de la présente technique. Par exemple les points d'attache (33) peuvent être portés par des bras longitudinaux, ou bien se trouver à l'arrière de la pièce de maintien (30).

Les évidements dans la surface plane (31) permettent de conférer de l'élasticité à la pièce (30), tout en conservant de la rigidité dans les montants latéraux (32) enserrant le boitier (21). Lors du passage d'une carte magnétique (11) dans la fente d'un lecteur (10) muni du dispositif (30), la carte (11) exerce une poussée sur la face avant de la tête de lecture qui tend à déplacer le boitier (21) dans sensiblement selon la direction Oz, ce qui entraine une déformation de la surface plane ajourée (31). En réaction cette-dernière exerce une force de rappel sensiblement selon la direction Oz, et assure ainsi un bon contact entre la tête de lecture et la piste magnétique de la carte (11) durant toute la phase de translation de la carte au travers de la fente du lecteur (10).

Dans l'exemple de mise en œuvre représenté sur les figures 3 à 9, les évidements donnent à la surface plane ajourée (31) une forme en zigzag ou en W. Cette forme est par exemple répétée de chaque côté de la pièce (30) selon l'axe y du repère Oxyz de la figure 2. Dans ce mode de réalisation, cette séparation de la surface (31) en son centre selon l'axe « y » permet de lui conférer une souplesse et une élasticité accrues. Sur la figure 3, le zigzag (ou w) est orienté selon l'axe « x » du repère Oxyz. Naturellement les évidements peuvent avoir d'autres formes tout en assurant la même fonction, c'est à dire en conférant à la surface plane ajourée (31) une élasticité permettant à la pièce (30) de maintenir la tête en contact avec la bande lors de la lecture, et en limitant les dimensions L' et l' de la surface plane ajourée (31) pour quelles soient sensiblement égales à aux dimensions L et l de la face arrière (22) du boitier (20) de la tête de lecture. De cette manière, la force de rappel sur le boitier (20) permettant de maintenir la tête de lecture en contact avec la bande magnétique est produite par une déformation élastique d'une surface flexible (31) située à l'arrière du boitier (20) maintenu par la pièce (30). Une forme de W ou de zigzag orienté selon l'axe « y » peut également donner des résultats satisfaisants, par exemple en réduisant la longueur des montants latéraux. Un autre exemple consisterait à conférer une forme de vague, orientée selon l'axe « x » ou l'axe « y ». La fonction de maintien du boitier (20) est donc assurée par une pièce unique (30) extrêmement compacte.

Lorsque le boitier (20) est inséré entre les deux montants latéraux (32) de la pièce de maintien (30), l'ensemble peut être manipulé sans qu'il y ait un risque de séparation intempestive des deux éléments.

Selon un mode de réalisation, la pièce de maintien (30) est métallique. La pièce (30) peut alors être aisément reliée à la masse du lecteur (10).

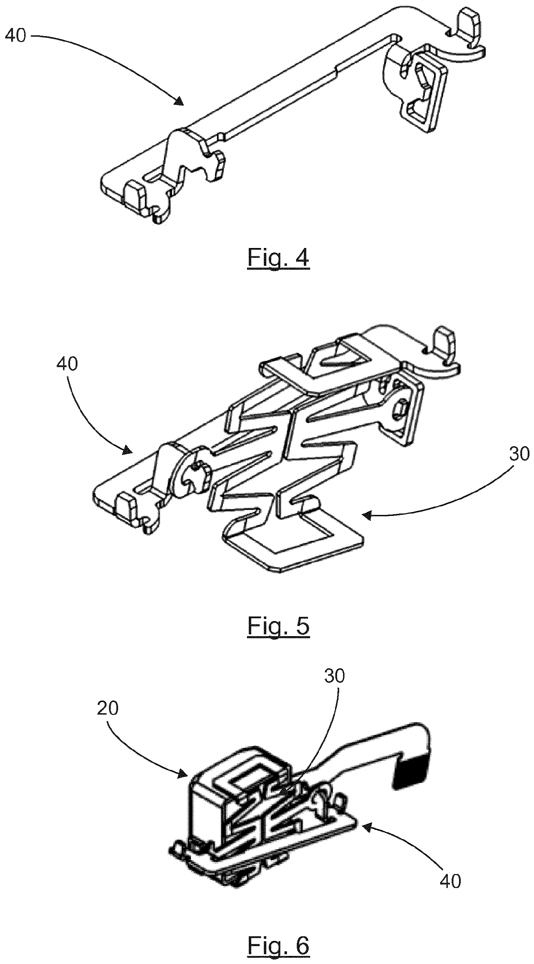

Dans un mode de réalisation, la pièce de maintien (30) du boitier (20) est associée à un élément support conçu pour être fixé directement sur la carte mère du lecteur (10). Un exemple d'élément support (40) est représenté sur la figure 4.

L'élément de support (40) est conçu comme un composant électronique et il est directement soudé sur la carte mère du lecteur (10), ce qui facilite grandement sa fabrication et son montage, et permet également de le relier directement à la masse du lecteur (10) avec un contact d'excellente qualité.

Selon l'exemple de mise en œuvre représenté sur les figures 3 à 9, les points d'attache (33) de la pièce de maintien (30) comprennent des ouvertures qui viennent s'enficher par clipsage sur l'élément de support (40).

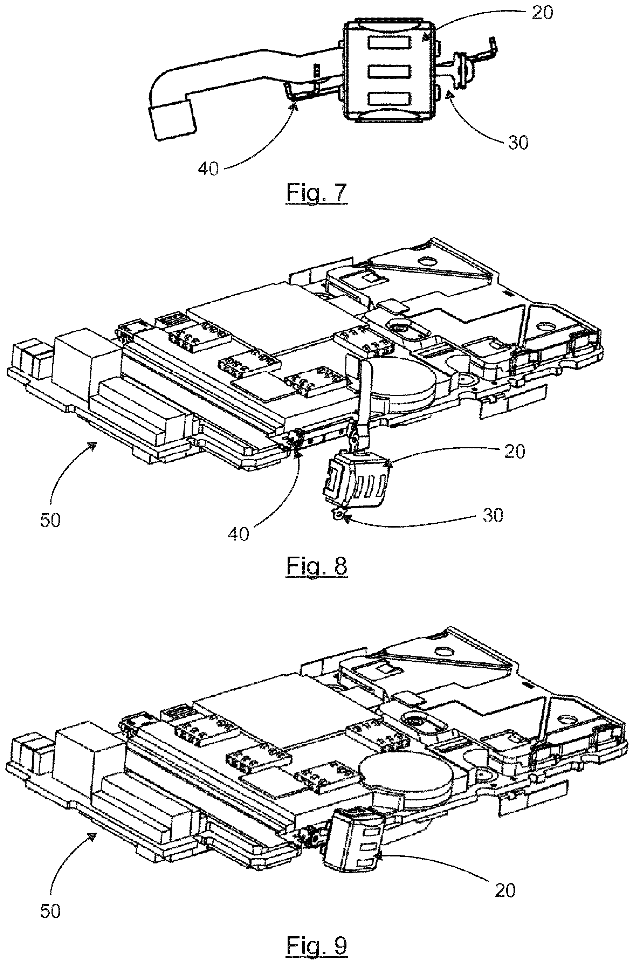

La figure 5 représente l'assemblage de la pièce de maintien (30) de la figure 3 et de l'élément de support (40) de la figure 4. Les figures 6 et 7 sont respectivement des vues de trois-quarts arrière et de face de l'assemblage lorsque le boitier (20) d'une tête de lecture magnétique est maintenu par la pièce de maintien (30). La figure 7 représente plus particulièrement l'assemblage dans une position d'utilisation, c'est-à-dire la position dans laquelle l'assemblage est inséré dans le terminal de la figure 1. Comme on peut le constater, l'élément de support (40) est incliné relativement au plan horizontal d'un angle d'environ 15 à 30 degrés tandis que la tête magnétique (20) (et ses trois pistes de lecture) et le dispositif de maintien (30) sont parallèles à ce même plan horizontal. Cet agencement présente l'avantage de pouvoir disposer d'un terminal dont la face avant (la face comprenant le clavier et l'écran) est inclinée tout en assurant que le passage de la carte magnétique dans le lecteur de carte magnétique puisse être réalisé à l'horizontal. Ceci offre une plus grande maniabilité de la carte dans le lecteur et notamment assure que le mouvement de translation de la carte dans le lecteur soit réalisé de manière optimale. Plus particulièrement, cela permet de conserver la carte enfoncée parallèlement au plan horizontal pendant la lecture, ce qui est plus simple pour l'utilisateur.

Les figures 8 et 9 représentent deux étapes de l'assemblage de la pièce de maintien (30) de la figure 3, avec l'élément support (40) de la figure 4 préalablement soudé sur la carte mère (50) du lecteur de cartes magnétiques à fente (10). Dans une première étape, représentée sur la figure 8, l'ouverture d'un point d'attache (33) de la pièce (30) est enfichée sur l'élément support (40). Puis, après avoir effectué un pivotement de la pièce (30), l'ouverture du second point d'attache (33) de la pièce (30) est également enfichée sur l'élément support (40). La carte mère (50) peut alors être manipulée sans que la pièce de maintien (30) ou la tête de lecture ne risquent de s'en détacher.

Ainsi on a décrit un dispositif de maintien (30) d'une tête de lecture magnétique, comportant une pièce unique (30) de dimensions encore plus réduites que celles des dispositifs selon l'art antérieur. En associant la pièce de maintien (30) à un élément de support (40), on dissocie la fonction de maintien du boitier (20) de la tête de lecture magnétique, et la fonction de fixation sur la carte mère (50) du lecteur (10). L'élément de maintien (30) est alors particulièrement facile à fabriquer. L'élément de support (40) est aussi particulièrement facile à fabriquer et à monter par soudage directement sur la carte mère (50) d'un lecteur de cartes magnétiques à fente (10), en assurant une connexion parfaite.

Lorsque l'élément de support (40) et la pièce de maintien (30) sont tous deux métalliques, la liaison à la masse du terminal (10) est optimale, ce qui confère une meilleure résistance aux décharges électrostatiques que celles des systèmes selon l'art antérieur.

## Revendications

1. Pièce de maintien (30) d'un boîtier (20) d'une tête de lecture magnétique d'un lecteur de cartes magnétiques, la pièce de maintien comprenant:
- une surface plane ajourée (31) sensiblement de même longueur et de même largeur que la face arrière (22) du boîtier (20) de la tête de lecture,
- deux surfaces perpendiculaires à ladite surface plane ajourée (31) qui forment deux montants latéraux (32) parallèles entre eux destinés à enserrer le boîtier (20) de la tête de lecture magnétique, et
- au moins un point d'attache (33),
**caractérisée en ce que** ladite surface plane ajourée (31) est destinée à être disposée en regard de la face arrière (22) du boîtier de la tête de lecture.

2. Pièce de maintien (30) selon la revendication 1, **caractérisée en ce que** la surface plane ajourée (31) a une forme en zigzag.

3. Pièce de maintien (30) selon l'une des revendications précédentes, **caractérisée en ce que** la pièce (30) comporte deux bras portant chacun un point d'attache (33) avec une ouverture destinée à être enfichée dans un élément support (40) fixé à la carte mère (50) d'un lecteur de cartes magnétiques à fente (10).

4. Pièce de maintien (30) selon l'une des revendications précédentes, **caractérisée en ce qu'**elle est métallique.

5. Lecteur de cartes magnétiques à fente (10) comportant une tête de lecture magnétique maintenue par une pièce de maintien (30) selon d'une des revendications précédentes.

6. Lecteur de cartes magnétiques à fente (10) selon la revendication 5, **caractérisé en ce qu'**il comporte une carte mère (50) sur laquelle est fixé un élément support (40) dans lequel sont enfichées les deux ouvertures des points d'attache (33) d'une pièce de maintien (30) selon la revendication 3.

7. Lecteur de cartes magnétiques à fente (10) selon la revendication 6, **caractérisé en ce que** l'élément support (40) est soudé à la carte mère (50).

8. Lecteur de cartes magnétiques à fente (10) selon d'une des revendications 6 ou 7, **caractérisé en ce que** l'élément support (40) est relié à la masse du lecteur (10) et **en ce que** l'élément support (40) et la pièce de maintien (30) sont métalliques.

## Patentansprüche

1. Haltestück (30) eines Gehäuses (20) eines Magnetlesekopfes eines Magnetkartenlesers, wobei das Haltestück aufweist:
- eine durchbrochene ebene Fläche (31) von im Wesentlichen der gleichen Länge und der gleichen Breite wie die Rückseite (22) des Gehäuses (20) des Lesekopfes,
- zwei Flächen, die senkrecht zu der durchbrochenen ebenen Fläche (31) sind, die zwei seitliche Pfosten (32) bilden, die parallel zueinander sind, die dazu bestimmt sind, das Gehäuse (20) des Magnetlesekopfes einzuschließen, und
- mindestens einen Befestigungspunkt (33),
**dadurch gekennzeichnet, dass** die durchbrochene ebene Fläche (31) dazu bestimmt ist, gegenüberliegend von der Rückseite (22) des Gehäuses des Lesekopfes angeordnet zu werden.

2. Haltestück (30) nach Anspruch 1, **dadurch gekennzeichnet, dass** die durchbrochene ebene Fläche (31) eine Zickzackform aufweist.

3. Haltestück (30) nach einem der vorhergehenden Ansprüche, **dadurch gekennzeichnet, dass** das Stück (30) zwei Arme aufweist, die jeweils einen Befestigungspunkt (33) mit einer Öffnung tragen, die dazu bestimmt ist, in ein Halteelement (40) eingesteckt zu werden, das an der Hauptplatine (50) eines Magnetkartenlesers mit Schlitz (10) befestigt ist.

4. Haltestück (30) nach einem der vorhergehenden Ansprüche, **dadurch gekennzeichnet, dass** es aus Metall ist.

5. Magnetkartenleser mit Schlitz (10), umfassend einen Magnetlesekopf, der von einem Haltestück (30) nach einem der vorhergehenden Ansprüche gehalten wird.

6. Magnetkartenleser mit Schlitz (10) nach Anspruch 5, **dadurch gekennzeichnet, dass** er eine Hauptplatine (50) aufweist, auf der ein Halteelement (40) befestigt ist, in das die zwei Öffnungen der Befestigungspunkte (33) eines Haltestücks (30) nach Anspruch 3 eingesteckt sind.

7. Magnetkartenleser mit Schlitz (10) nach Anspruch 6, **dadurch gekennzeichnet, dass** das Halteelement (40) an die Mutterkarte (50) gelötet ist.

8. Magnetkartenleser mit Schlitz (10) nach einem der Ansprüche 6 oder 7, **dadurch gekennzeichnet, dass** das Halteelement (40) an die Masse des Lesers (10) angeschlossen ist und dadurch, dass das Halteelement (40) und das Haltestück (30) aus Metall sind.

## Claims

1. Component (30) for holding a housing (20) of a magnetic reading head of a magnetic card reader, said holding component (30) comprising:
- a perforated plane surface (31) appreciably of the same length and same width as the rear face (22) of the housing (20) of the reading head,
- two surfaces perpendicular to said perforated plane surface (31) that form two mutually parallel lateral uprights (32) intended to grip the housing (20) of the magnetic reading head, and at least one affixation point, and
- at least one affixation point (33),
**characterized in that** said perforated plane surface is to be disposed so as to be facing the rear face of the housing of the reading head.

2. Holding component (30) according to claim 1, **characterized in that** the perforated plane surface (31) of the holding element has a zigzag shape.

3. Holding component (30) according to any one of the above claims, **characterized in that** the component (30) has two arms each bearing an affixation point (33) with an aperture to be plugged with a supporting element (40) fixed to the motherboard (40) of a slotted magnetic card reader (10).

4. Holding component (30) according to any one of the above claims, **characterized in that** it is metallic.

5. Slotted magnetic card reader (10) comprising a magnetic reading head, maintained by a holding component (30) according to any one of the preceding claims.

6. Slotted magnetic card reader (10) according to claim 5, **characterized in that** it comprises a motherboard (50) to which there is affixed a supporting element (40) into which are plugged the two apertures of the affixation points (33) of a holding component (30) according to claim 3.

7. Slotted magnetic card reader (10) according to claim 6, **characterized in that** the supporting element (40) is soldered to the motherboard (50).

8. Slotted magnetic card reader (10) according to one of the claims 6 or 7, **characterized in that** the supporting element (40) is connected to the ground of the reader (10) and **in that** the supporting element (40) and the holding component (30) are metallic.
